# EUROPEAN PATENT SPECIFICATION

(11) **EP 1 082 210 B1**
(45) Date of publication and mention of the grant of the patent: **11.08.2004**
(21) Application number: 99927019.2
(22) Date of filing: 27.04.1999
(51) Int. Cl.: B32B 1/08, B32B 17/04, F16L 58/10, F16L 55/165, B29C 63/34

(54) **LAMINATE**
VERBUNDSTOFF
STRATIFIE

(30) Priority: 29.04.1998 SE 9801504
(43) Date of publication of application: 14.03.2001
(73) Proprietor: Inpipe Sweden AB, 912 32 Vilhelmina (SE)
(72) Inventor: PERSSON, Börje, S-912 33 Vilhelmina (SE)
(74) Representative: Onn, Thorsten
(86) International application number: PCT/SE1999/000684
(87) International publication number: WO 1999/058326

(56) References cited:
- EP-A1- 0 087 613
- EP-A1- 0 660 025
- EP-A1- 0 770 812
- EP-A2- 0 795 715
- WO-A1-92/14606

## Description

This invention relates to a laminate for lining a passage, entirely or partially surrounded by walls, on or under the ground, for instance pipelines for gas, water and/or a sewerage, channels for instance for ventilation, smoke and the like, comprising at least one layer of a reinforcement of continuous fibres, curable resin and a plastic foil or a plastic film, which is on the inside of the laminate when this one is introduced into the passage that shall be lined, there being arranged a fabric of fibres between the inner film and the reinforcement, which fabric on its side turned to the inner film carries cut fibres, and which together with its cut fibres form a combination fabric, absorbing resin, for concentration of curable resin to the inner surface of the cured laminate.

Such a laminate is previously known by the international patent document WO 92/14606. As appears from this patent document the fabric of glass fibres has an axial joint. In this connection the portions adjacent to the joint are laid in that way that they overlap each other, which leads to a local increase of the thickness of the laminate. This in its turn can lead to high stress concentrations in this area with local increase of the thickness with a deteriorated life length of the laminate as a result.

This invention intends to remove the problem with known technique and to provide a new laminate where the risk of increased stress concentrations is essentially eliminated. This has been made possible by a laminate of the type mentioned by way of introduction, which has the features mentioned in the claims.

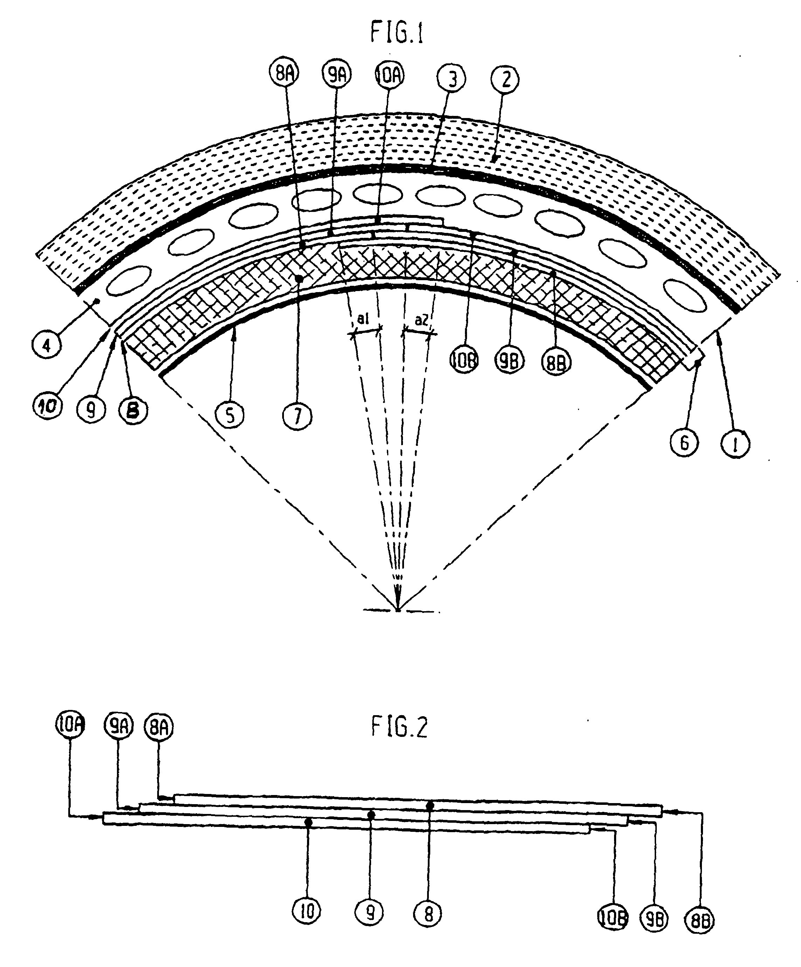

A preferred embodiment of the invention shall be described in more detail below with reference to the accompanying drawing, where **Fig. 1** shows a section of the laminate in place in a passage, and **Fig. 2** shows the construction of a fabric being a part of the laminate.

With reference to fig. 1 is shown there in section a part of a lining laminate I introduced in place inside a passage 2, surrounded by walls, for instance a pipe line that shall be lined and be held pressed against the wall 3 of the passage. Besides at least one and preferably more plaited reinforcement layers 4 of the kind mentioned above and an inner film 5 which only functions as a protection until the resin of the laminate has been forced to cure and which thereafter can be removed, the embodiment of the lining laminate according to the invention, shown in the figure, comprises a fabric 6 which is made of continuos glass fibres and which on its side turned to the inner film 5 carries cut fibres 7, preferably cut glass fibres, forming a combination fabric. The cut fibres can constitute a mat which is laid on the fabric 6. The material of the plaited reinforcement 4 is composed of roving and the roving can be of "KOSMOS", conventional or bulked type. The glass fibre, being a part of the combination fabric, i.e. the fabric 6 together with the cut glass fibres 7 put in it, can be composed of E-, ECR-, ADVANTEX-, C-glass or of other fibre materials of high quality.

The fabric 6 with cut glass fibres 7, denoted combination fabric, has among other things that quality that it absorbs resin to an essentially larger extent than the reinforcement 4 and due to that fact the resin, being part of the laminate 1, will in first hand be absorbed by the combination fabric 6, 7 until this one is saturated and thanks to that fact a concentration of resin to the inner surface portion or surface layer of the laminate is obtained. Thus, when the resin has been forced to cure, an internal surface layer comprising solely resin with cut glass fibres as a reinforcement is obtained, which layer is resistant to corrosion. At the same time the cured resin intimately connects the combination fabric 7 with adjacent reinforcement layer 4 so that a lining with a very high strength is created.

The fabric 6, being part of the laminate, has a joint which extends in axial direction and comprises according to this embodiment three layers 8-10, put together. In this connection the three layers have in the starting-point displaced positions in relation to each other, which is shown in fig. 2. In this figure are shown three layers 8-10, which are essentially of the same size, and which have been put on top of each other but are laterally displaced. In this connection the displacement is made in that way that the axial side portion B of the layer 8 has been pulled out outside the axial side portion B of the layer 8, the axial side portion B of which has been pulled out outside the axial side portion B of the layer 10. This means that the axial side portion A of the layer 8 has landed inside of the axial side portion A of the layer 9 with the same distance as the side portion B of the layer 8 is positioned outside the side portion of the layer 9, and that the axial side portion A of the layer 9 has landed inside the axial side portion A of the layer 10 with the same distance as the side portion B of the layer 9 is positioned outside the side portion B of the layer 10.

When laying together the side portions A and B to a ring, is obtained such an arrangement shown in fig. 1, i.e. the portion 9A touches the portion 10B, the portion 8A touches the portion 9B, whereas the portion 10A is landed on the top and the portion 8B at the bottom. As is apparent from fig. 1 the portion 10A and the portion 8B pass with a good distance the joint between the portions 9A and 10B and the joint between the portions 8A and 9B, respectively. Due to that fact these joints are protected. The shown arrangement implies that the local increase of the thickness and by that the stress concentrations in this case become considerably less than what would be the case if the side portions would overlap each other as is shown in the mentioned WO-document.

Furthermore, the described joint arrangement makes possible that the end portions of the different layers can slide in relation to each other during the installation/expansion phase. This fact makes the new laminate very flexible and adaptable, seen from a diametric point of view.

During the curing which can be made by means of UV-light, which is emitted from an apparatus, which passes through the lining with a controlled speed at the same time as compressed air presses the laminate towards the wall of the passage. This means that the fabric 6 is stretched out, i.e. the end portions of the layers, put together, slide in relation to each other in that way that there will be a distance in the joint between the A- and the B portions of the layers. In the figure there is shown two distances a₁ and a₂. In this connection a₁ constitutes the distance between the end portion of 8B and the joint between 8A/9B, whereas a₂ constitutes the distance between the joint 9A/10B and the end portion of 10A. It is important that the joint arrangement is designed in that way that the distances a₁ and a₂ (sec Fig. 1), which in the normal case are essentially of the same size, always are larger than the stretching out of the fabric 6, which means that the joint 9A/10B is landed inside the end portion 10A of the layer 10, whereas the joint 8A/9B is landed inside of the other end portion 8B of the layer 8. This fact means that the mentioned joints are protected by the end portions 10A and 8B, which leads to an extremely good strength of the laminate.

The invention is of course not limited to the mentioned embodiment but can be modified within the scope of the following claims. Thus, the fabric being a part of the laminate could consist of only two layers or more than three layers.

## Claims

1. A laminate with a ring-Shaped cross-section for lining a passage, entirely or partially surrounded by walls, on or under the ground, for instance pipe lines for gas, water and/or a sewerage, channels for instance for ventilation, smoke and the like, comprising at least one layer of a reinforcement of continuous fibres, a curable resin and a plastic foil or a plastic film, which is on the inside of the laminate when this one is introduced into the passage that shall be lined, there being arranged a fabric of fibres between the inner film and the reinforcement, which fabric on its side turned to the inner film carries cut fibres, and which together with its cut fibres form a combination fabric, which can absorb resin and concentrate the curable resin at the inner surface of the cured laminate, **characterized in that** the fabric (6) comprises at least two layers (8-10), put together, each one of which in an inactive position having two essentially parallel side portions (A, B), and which are displaced in relation to each other in such a way that in an active position, i.e. when the side portions (A, B) have been laid to form a ring, there is formed a joint between the one side portion (A) of the one layer (8, 9) and the other end portion (B), of the other layer (9, 10), the remaining end portions (B, A) of the two layers (8, 9; 9, 10) being positioned **in that** way that they cover the joint on each side, and the joint arrangement making it possible for the end portions of the layers to be able to slide in relation to each other during the installation/expansion phase.

2. A laminate according to claim 1, the fabric comprising three layers (8-10), put together, and the layer (8) being positioned on top and the layer (10) at the bottom at the starting point, **characterized in that** the first end portion (9A) of the intermediate layer forms, radially seen, an outer joint with the second end portion (10B) of the lowermost layer, that the first end portion (8B) of the uppermost layer forms, radially seen, an inner joint with the second end portion (9B) of the intermediate layer, and that the first end portion (10A) of the lowermost layer and the second end portion (8B) of the uppermost layer cover the mentioned joints (9A/10B) and (8A/9B) in such a way that even if the end portions of the layers slide in relation to each other at respective joint, the joints (9A/10B) and (8A/9B) will be covered by the mentioned end portions (10A, 8B).

## Patentansprüche

1. Verbundstoff mit ringförmigem Querschnitt zum Auskleiden eines ganz oder teilweise von Wänden umgebenen, ober- oder unterirdischen Durchgangs, beispielsweise Rohrleitungen für Gas, Wasser und/oder eine Kanalisation oder Kanäle beispielsweise für Lüftung, Rauch oder dergleichen, mit mindestens einer Verstärkungsschicht aus durchgehenden Fasern, einem härtbaren Harz und einer auf der Innenseite des in den auszukleidenden Kanal eingeführten Laminats liegenden Plastikfolie oder einem solchen Plastikfilm, wobei zwischen dem inneren Film und der Verstärkung ein Fasergewebe angeordnet ist, welches auf der dem inneren Film zugewandten Seite Schnittfasern aufweist und zusammen mit den Schnittfasern ein Kombinationsgewebe bildet, welches in der Lage ist, Harz zu absorbieren und das härtbare Harz an der inneren Oberfläche des gehärteten Laminats zu konzentrieren, **dadurch gekennzeichnet, dass** das Gewebe (6) aus mindestens zwei zusammengefügten Schichten (8-10) besteht, welche in der inaktiven Stellung jeweils zwei im wesentlichen parallele Seiten (A, B) aufweisen und derart zueinander versetzt sind, dass in der aktiven Stellung, d.h. wenn die Seiten (A, B) zu einem Ring zusammengelegt sind, zwischen der einen Seitenpartie (A) der einen Schicht (8, 9) und der anderen Endpartie (B) der anderen Schicht (9, 10) eine Verbindung gebildet wird, wobei die verbleibenden Endpartien (B, A) der zwei Schichten (8, 9; 9, 10) derart angeordnet sind, dass sie die Verbindung auf beiden Seiten überdecken, und wobei die Anordnung der Verbindung eine gegenseitige Verschiebung der Endpartien der Schichten während der Installations- und Expansionsphase gestattet.

2. Verbundstoff nach Anspruch 1, wobei das Gewebe aus drei zusammengefügten Schichten (8-10) besteht und am Anfangspunkt die Schicht (8) zuoberst und die Schicht (10) zuunterst liegt, **dadurch gekennzeichnet, dass** die erste Endpartie (9A) der Zwischenschicht radial gesehen mit der zweiten Endpartie (10B) der untersten Schicht eine äussere Verbindung bildet, dass die erste Endpartie (8B) der obersten Schicht radial gesehen mit der zweiten Endpartie (9B) der Zwischenschicht eine innere Verbindung bildet, und dass die erste Endpartie (10A) der untersten Schicht und die zweite Endpartie (8B) der obersten Schicht die genannten Verbindungen (9A/10B) und (8A/9B) derart überdecken, dass die Verbindungen (9A/10B) und (8A/9B) auch dann von den genannten Endpartien (10A, 8B) bedeckt sind, wenn sich die Endpartien der Schichten bei den jeweiligen Verbindungen gegeneinander verschieben.

## Revendications

1. Stratifié de coupe transversale annulaire pour le revêtement d'un passage de surface ou souterrain, entièrement ou partiellement entouré de parois, par exemple des conduites de gaz, d'eau et/ou un égout, des canaux de ventilation, de fumée et autres, comprenant au moins une couche d'un renforcement de fibres continues, une résine durcissable et une feuille ou un film en plastique, situé(e) à l'intérieur du stratifié lorsque ce dernier est introduit dans le passage à revêtir, un tissu de fibres étant disposé entre le film intérieur et le renforcement, lequel tissu comporte des fibres coupées du côté en regard vers le film intérieur et forme avec lesdites fibres coupées un tissu combiné capable d'absorber de la résine et de concentrer la résine durcissable à la surface intérieure du stratifié durci, **caractérisé en ce que** le tissu (6) comprend au moins deux couches (8-10) jointes présentant chacune dans une position inactive deux parties latérales (A, B) essentiellement parallèles et décalées l'une par rapport à l'autre de telle manière que dans une position active, c'est-à-dire lorsque les parties latérales (A, B) ont été mises en place en forme d'anneau, un joint est formé entre l'une des parties latérales (A) de l'une des couches (8, 9) et l'autre extrémité (B) de l'autre couche (9, 10), les extrémités restantes (B, A) des deux couches (8, 9; 9, 10) étant positionnées de telle manière qu'elles recouvrent le joint de chaque côté, et l'arrangement du joint permettant le déplacement réciproque des extrémités des couches pendant la phase d'installation ou d'expansion.

2. Stratifié selon la revendication 1, le tissu comprenant trois couches (8-10) jointes, et la couche (8) étant disposée dessus et la couche (10) au bas au point de départ, **caractérisé en ce que** la première extrémité (9A) de la couche intermédiaire, vue en direction radiale, forme un joint extérieur avec la deuxième extrémité (10B) de la couche la plus basse, que la première extrémité (8B) de la couche supérieure, vue en direction radiale, forme un joint intérieur avec la deuxième extrémité (9B) de la couche intermédiaire, et que la première extrémité (10A) de la couche la plus basse et la deuxième extrémité (8B) de la couche supérieure couvrent lesdits joints (9A/10B) et (8A/9B) de telle manière que les joints (9A/10B) et (8A/9B) sont recouverts par lesdites extrémités (10A, 8B) même si les extrémités des couches se glissent les unes par rapport aux autres à l'endroit desdits joints respectifs.
